# EUROPEAN PATENT SPECIFICATION

(11) **EP 2 503 351 B1**
(45) Date of publication and mention of the grant of the patent: **18.09.2013**
(21) Application number: 11159924.7
(22) Date of filing: 25.03.2011
(51) Int. Cl.: G01S 3/04, G01S 3/30, G01S 7/02

(54) **Wide-open receiver with continuous-wave-protected channel**
Weit geöffneter Empfänger mit einem Dauerstrichsignalgeschützten Kanal
Récepteur grand ouvert doté d'un canal protégé contre les ondes continues

(43) Date of publication of application: 26.09.2012
(73) Proprietor: Elettronica S.p.A., 00131 Roma RM (IT)
(72) Inventor: Torti, Roberto, 01036, NEPI (IT); Chiarini Petrelli, Alessandro, 00133, ROMA (IT); Rabbia, Antonio, 00198, ROMA (IT); Gasparro, Giovanni, 04011, APRILIA (IT); Parigi, Alessandro, 00131, ROMA (IT)
(74) Representative: Bergadano, Mirko

(56) References cited:
- EP-A1- 0 546 723
- US-B1- 6 727 840
- ALLEVA V ET AL: "Digital antenna unit for DOA analysis in ESM systems", RADAR CONFERENCE (EURAD), 2010 EUROPEAN, IEEE, PISCATAWAY, NJ, USA, 30 September 2010 (2010-09-30), pages 479-482, XP031784651, ISBN: 978-1-4244-7234-5

## Description

### TECHNICAL FIELD OF THE INVENTION

The present invention relates, in general, to Electronic Support Measure (ESM) systems and radar warning systems, and, more particularly, to Wide-Open (WO) receivers exploited by said systems.

### BACKGROUND ART

As is known, a Wide-Open (WO) receiver is designed to operate in a operating frequency band so that, at a considered time instant, it operates in an instantaneous frequency band equal to the overall operating frequency band, unlike, for example, a superheterodyne receiver which, at a considered time instant, operates in an instantaneous frequency band smaller than an overall operating frequency band in which it is designed to operate.

Traditional WO receivers used in Electronic Support Measure (ESM) systems and radar warning systems exploit a specific antenna pattern configuration, generally known as goniometric channel configuration, to discover threats in surrounding electromagnetic environment and to estimate corresponding Directions Of Arrival (DOA).

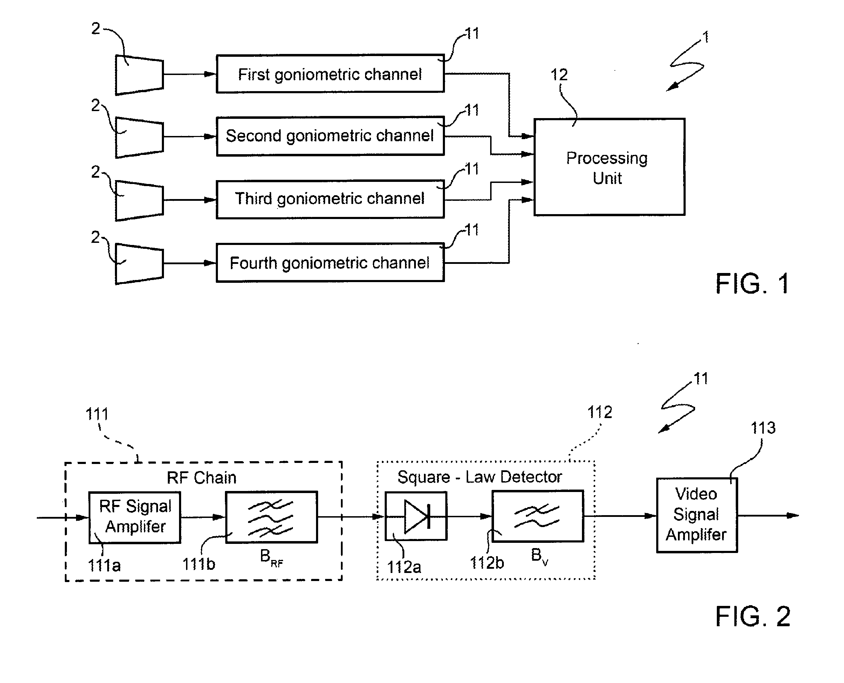

In this connection, figure 1 shows a block diagram schematically representing a typical architecture of a traditional WO receiver 1 designed to cooperate with four directional antennas 2.

In detail, the WO receiver 1 shown in figure 1 comprises:
- four goniometric channels 11 each of which is coupled with a corresponding directional antenna 2 to receive therefrom radiofrequency (RF) signals received by said corresponding antenna 2, and is operable to apply a pre-processing to the received RF signals so as to obtain corresponding video signals; and
- a processing unit 12 coupled with the four goniometric channels 11 to receive therefrom the video signals, and operable to process the received video signals so as to detect any threat and, in case, to determine corresponding DOA.

Figure 2 shows an operational block diagram representing in greater detail a typical architecture of a traditional goniometric channel, in particular of each of the goniometric channels 11.

In detail, as shown in figure 2, each of the goniometric channels 11 comprises:
- a respective RF chain 111 (represented in figure 2 by a dashed block) which includes a respective RF signal amplifier 111a for amplifying the RF signals received from the corresponding directional antenna 2 (not shown in figure 2), and respective RF filtering means 111b for RF filtering the RF signals amplified by the RF signal amplifier 111a;
- a respective square-law detector 112 (represented in figure 2 by a dotted block) which includes a respective diode 112a coupled with the RF chain 111 to acquire therefrom the RF-filtered signals and operable to provide output signals proportional to the square of the acquired signals, i.e., proportional to power levels of the acquired signals, and respective video filtering means 112b for video filtering the output signals provided by the diode 112a; and
- a respective video signal amplifier 113 for amplifying the signals video-filtered by the video filtering means 112b so as to obtain amplified video signals which are provided to the processing unit 12 (not shown in figure 2).

In modern ESM systems and radar warning systems, Continuous Wave (CW) protection capability is one of the most important requirements for the receiver in order to:
- detect and manage CW threats; and
- detect and manage pulse threats superimposed on CW threats.

As is known, a CW is an electromagnetic wave of constant amplitude and frequency, while an Intermittent, or Interrupted, Continuous Wave (ICW) is a CW modulated with an on-off keyed carrier.

Traditional WO receivers are particularly sensitive to the presence of CW/ICW signals in the surrounding electromagnetic environment. In fact, traditional WO receivers, when illuminated by one or more CW/ICW signal(s), could be totally blinded by said CW/ICW signal(s) thereby not detecting other pulsed signals of interest, i.e., pulsed-threat-related signals, superimposed on said CW/ICW signal(s).

In particular, traditional WO receivers typically protect their detection capability by looking beyond CW/ICW level, namely by increasing a detection threshold up to CW/ICW power level, thereby reducing their operative dynamic range so as to detect only pulsed-threat-related signals having a power level higher than the CW/ICW power level.

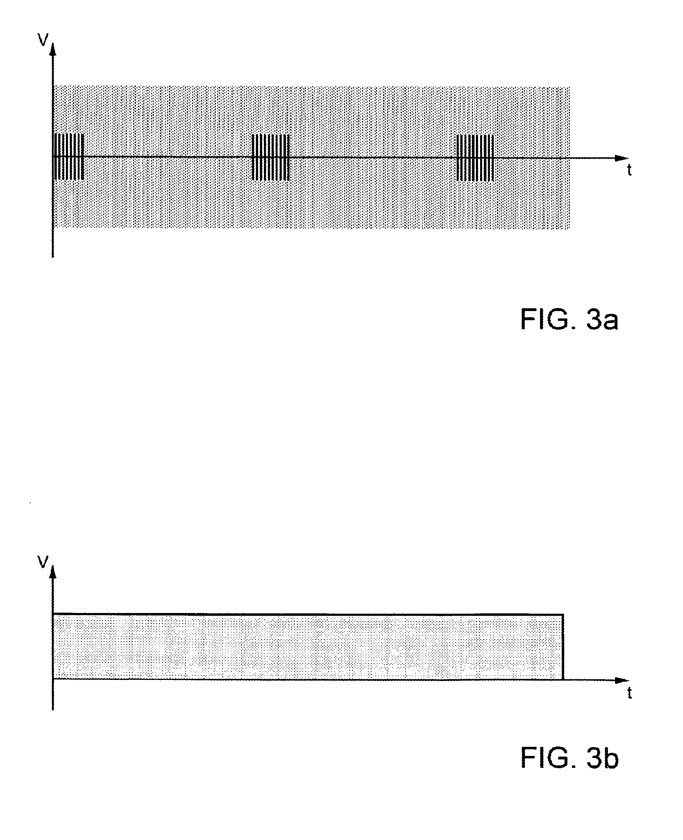

In this connection, figure 3(a) shows an exemplary RF signal provided as output by the RF chain 111 when the corresponding directional antenna 2 receives a CW signal superimposed on three pulsed signals. Moreover, figure 3(b) shows an output video signal provided by the square-law detector 112 when said square-law detector 112 receives as input the RF signal shown in figure 3(a).

On the basis of what has been previously described about CW protection capability of traditional WO receivers, it may be easily understood that the processing unit 12, when receives the video signal shown in figure 3(b), locks the detection threshold to the received CW video level thereby not detecting the three superimposed pulsed signals.

EP 0 546 723 A1 discloses a receiver with a separate channel to detect presence and frequency of a CW signal and to correspondingly set a notch filter for the pulse detection channel.

US 6, 727, 840 B1 discloses a multichannel receiver having a wide band receiver channel connected to an omnidirectional antenna and comprising notch filters to filter out known interfering CW signals. The filtered wide band signal are used to create a downconversion signal for the directional channels in order to reduce the effect of said known interfering CW signals on the directional channels.

### OBJECT AND SUMMARY OF THE INVENTION

The objective of present invention is then to provide a WO receiver which can alleviate at least in part the above cited drawbacks of the known WO receivers.

This objective is achieved by the present invention in that it relates to a wide-open receiver, an Electronic Support Measure system and a radar warning system, as defined in the appended claims.

The present invention achieves the aforementioned objective by a wide-open receiver comprising:
- a plurality of goniometric channels each intended to be coupled with a respective antenna to receive a respective incoming radiofrequency signal, and operable to obtain, on the basis of the respective incoming radiofrequency signal, a respective first video signal indicative of a power of said respective incoming radiofrequency signal, and a respective second video signal based on said respective first video signal; and
- processing means operable to detect, on the basis of the second video signals, one or more pulsed signal(s) present in one or more of the incoming radiofrequency signal(s).

Moreover, the wide-open receiver is characterized:
- by further comprising a continuous-wave-protected channel operable to receive a combined radiofrequency signal based on the incoming radiofrequency signals received by all the goniometric channels, and to obtain, on the basis of the combined radiofrequency signal, a continuous-wave-free radiofrequency signal which is free of a continuous wave signal present in one or more of the incoming radiofrequency signal(s), and a validation video signal on the basis of said continuous-wave-free radiofrequency signal;
- in that the processing means are operable to estimate a continuous wave power on the basis of the second video signals and of the validation video signal; and
- in that each goniometric channel is operable to remove, on the basis of the estimated continuous wave power, a continuous wave video signal contribution from the respective first video signal thereby obtaining a respective intermediate video signal, and to obtain the respective second video signal based on said respective intermediate video signal.

### BRIEF DESCRIPTION OF THE DRAWINGS

For a better understanding of the present invention, preferred embodiments, which are intended purely by way of example and are not to be construed as limiting, will now be described with reference to the attached drawings (all not to scale), wherein:
- Figure 1 schematically shows a typical architecture of a traditional wide-open receiver;
- Figure 2 shows in greater detail a goniometric channel of the wide-open receiver of Figure 1;
- Figures 3(a) and 3(b) show exemplary signals provided as output by, respectively, an RF chain and a square-law detector of the goniometric channel of Figure 2 in presence of a CW signal superimposed on three pulsed signals;

- Figure 4 schematically shows a wide-open receiver according to a preferred embodiment of the present invention;
- Figure 5 shows in greater detail a continuous-wave-protected channel of the wide-open receiver of Figure 4;
- Figure 6 shows a typical amplification function of a logarithmic amplifier preferably comprised by the continuous-wave-protected channel of Figure 5; and
- Figure 7 shows exemplary video signals outputted by all the channels of the wide-open receiver of Figure 4 in presence of a CW threat.

### DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed. Thus, the present invention is not intended to be limited to the embodiments shown, but is to be accorded the widest scope consistent with the principles and features disclosed herein and defined in the appended claims.

The present invention stems from Applicant's idea of:
- equipping a WO receiver with a channel protected from CW/ICW and enabling CW/ICW power level to be accurately estimated; and
- carrying out a CW compensation in each goniometric channel of the WO receiver on the basis of the estimated CW/ICW power level.

In this way, detection capabilities of the WO receiver are noticeably improved, especially in presence of pulsed signals under CW/ICW power level.

In particular, the CW compensation function ensures a reduction of the CW/ICW power level so as to increase operative dynamic range in the goniometric channels. Briefly, in the goniometric channels an estimated CW/ICW power level is subtracted from video signals outputted by square-law detectors before their amplification, so that all measurements of pulsed traffic can be performed in a linear dynamic range. The more accurate is the estimated level of the CW/ICW, the deeper is its cancellation. Due to the fact that received signals in each goniometric channel can be composed of CW/ICW and pulsed components, it is mandatory to correctly estimate average CW/ICW power level. The higher is the duty of the pulse traffic, the more complicate is this estimation.

As previously said, a WO receiver according to the present invention comprises a CW-protected channel which works synchronously with goniometric channels. In said CW-protected channel the CW/ICW signals are cancelled by means of tunable filtering means. Therefore, the CW-protected channel enables a separation of pulsed traffic from CW/ICW components. On the basis of a comparison between the goniometric and CW-protected channel detections, it's possible to determine real values of CW power level whose estimation and cancellation allows the WO receiver to increase its sensitivity. In other words, the estimation of CW level on the goniometric channels is validated by the absence of detection on the CW-protected channel. In this way, the WO receiver is able to detect and measure pulsed signals under CW (Sub CW visibility).

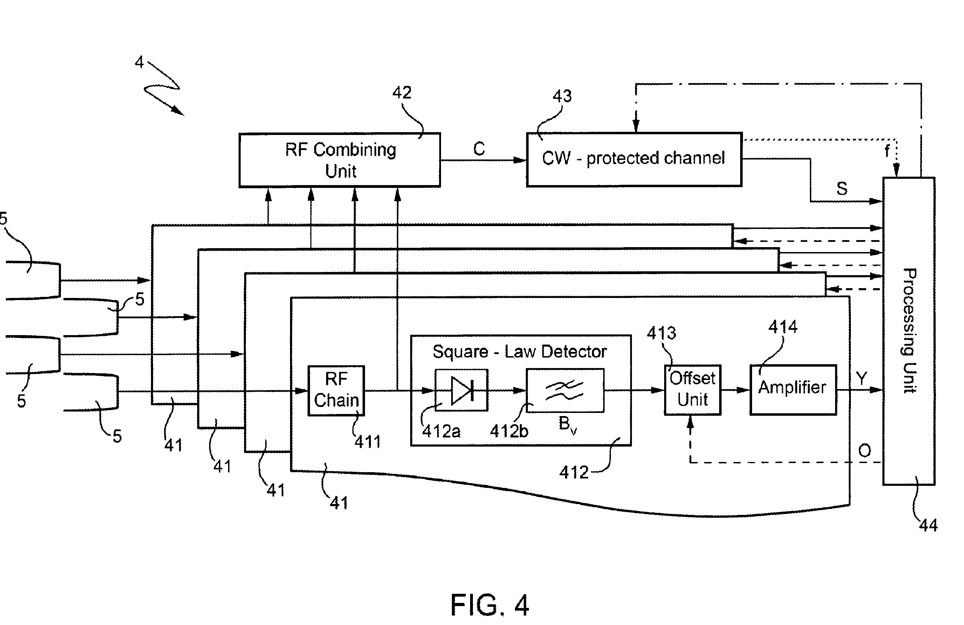

In order to enter into details of the present invention, figure 4 shows an operational block diagram schematically representing a WO receiver 4 according to a preferred embodiment of the present invention.

In particular, the WO receiver 4 shown in figure 4 is designed to cooperate with four directional antennas 5 and comprises:
- four goniometric channels 41 each coupled with a corresponding directional antenna 5;
- an RF combining unit 42 coupled with the goniometric channels 41;
- a CW-protected channel 43 coupled with the RF combining unit 42; and
- a processing unit 44 coupled with the goniometric channels 41 and the CW-protected channel 43.

In figure 4, for the sake of drawing clarity, only one goniometric channel 41 is fully represented, while other three goniometric channels 41 are represented in a stylized manner. In this connection, it is assumed that the stylized goniometric channels 41 are structured as the fully represented goniometric channel 41, comprise the same elements as the fully represented goniometric channel 41, and are designed to implement the same functionalities as the fully represented goniometric channel 41. Therefore, it remains implicit that everything described in the following regarding the fully represented goniometric channel 41 applies also to the stylized goniometric channels 41.

In detail, each goniometric channel 41 comprises a respective RF chain 411 coupled with the corresponding directional antenna 5 to receive therefrom, as an incoming signal, an RF signal received by said corresponding antenna 5, and operable to apply an RF pre-processing to the incoming signal so as to obtain a corresponding first pre-processed RF signal. Preferably, each RF chain 411 is designed to carry out a conventional RF pre-processing that, for example, includes an RF amplification and filtering of the incoming signal.

Moreover, each goniometric channel 41 further comprises a respective square-law detector 412 coupled with the respective RF chain 411 to receive therefrom the first pre-processed RF signal, and operable to obtain a first video signal on the basis of the first pre-processed RF signal received from the respective RF chain 411. Preferably, each square-law detector 412 is designed to carry out a conventional square-law detection and, therefore, conveniently includes a respective diode 412a and respective video filtering means 412b.

Furthermore, the RF combining unit 42 is coupled with the RF chains 411 of all the goniometric channels 41 to receive therefrom the first pre-processed RF signals provided by said RF chains 411, and is operable to combine the received first pre-processed RF signals into a combined RF signal C that is provided as input to the CW-protected channel 43. Preferably, the RF combining unit 42 is designed to add up the received first pre-processed RF signals.

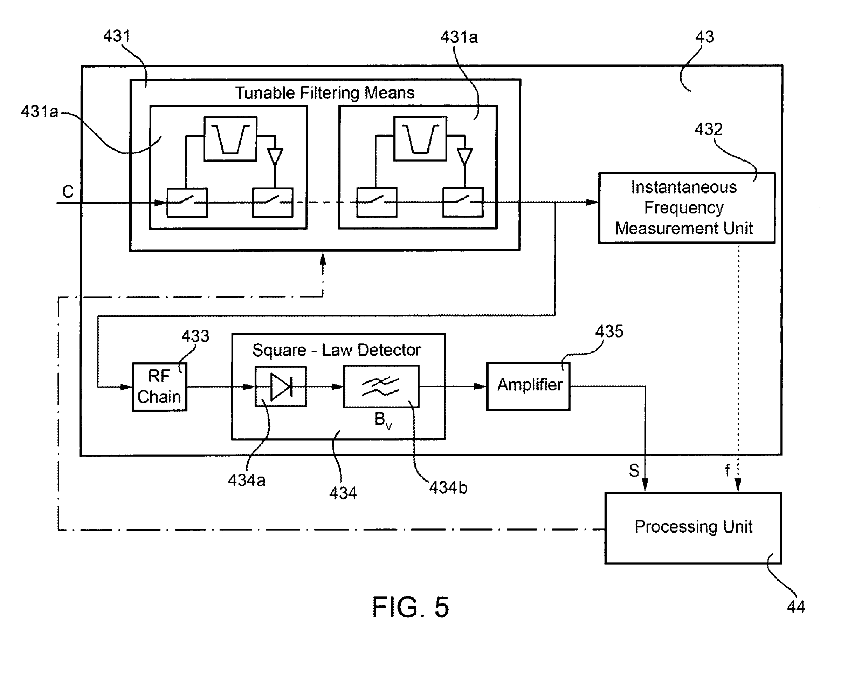

Figure 5 shows in greater detail the CW-protected channel 43. In particular, as shown in figure 5, the CW-protected channel 43 comprises tunable filtering means 431 for filtering out CW/ICW from the combined RF signal C provided by the RF combining unit 42. In particular, the tunable filtering means 431 provide as output an RF signal which is the incoming combined RF signal C if said tunable filtering means 431 are not activated, or a CW-filtered RF signal if said tunable filtering means 431 are activated. Preferably, the tunable filtering means 431 comprise a plurality of selectively-switchable notch filters 431a. Conveniently, said selectively-switchable notch filters 431a are selectively-switchable Yttrium Iron Garnet (YIG) filters.

Moreover, always as shown in figure 5, the CW-protected channel 43 further comprises:
- an instantaneous frequency measurement unit 432 coupled with the tunable filtering means 431 to receive therefrom the RF signal provided as output by said tunable filtering means 431, and operable to determine an instantaneous frequency f of a CW/ICW signal present in the RF signal received from the tunable filtering means 431;
- an RF chain 433 coupled with the tunable filtering means 431 to receive therefrom the RF signal provided by said tunable filtering means 431, and operable to apply an RF pre-processing to the RF signal received from the tunable filtering means 431 so as to obtain a second pre-processed RF signal;
- a square-law detector 434 coupled with the RF chain 433 to receive therefrom the second pre-processed RF signal, and operable to obtain a second video signal on the basis of the second pre-processed RF signal received from the RF chain 433; and
- an amplifier 435 coupled with the square-law detector 434 to receive therefrom the second video signal, and operable to amplify the second video signal received from the square-law detector 434 so as to obtain a validation signal *S* which is provided to the processing unit 44 to enable CW/ICW power level estimation.

Preferably, the RF chain 433 of the CW-protected channel 43 is designed to carry out a conventional RF pre-processing that, for example, includes an RF amplification and filtering of the RF signal received from the tunable filtering means 431.

Again preferably, also the square-law detector 434 of the CW-protected channel 43 can be designed to carry out a conventional square-law detection and, therefore, can conveniently include a respective diode 434a and respective video filtering means 434b.

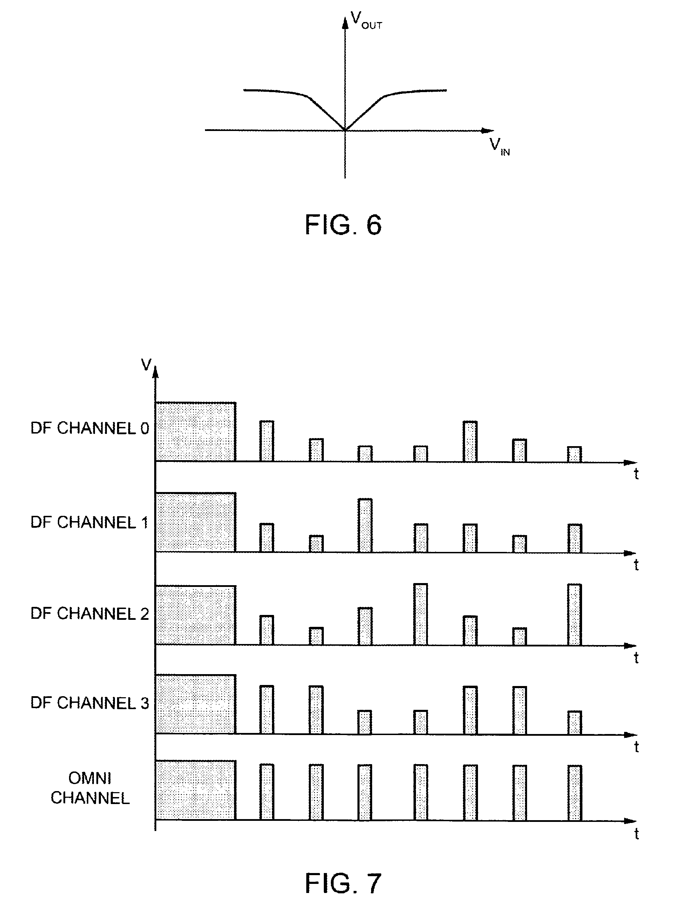

Always preferably, the amplifier 435 of the CW-protected channel 43 is a logarithmic amplifier. In this connection, figure 6 shows a typical amplification function of a logarithmic amplifier.

Again as shown in figure 5, the processing unit 44 is coupled with the instantaneous frequency measurement unit 432 of the CW-protected channel 43 to receive therefrom the CW/ICW instantaneous frequency f, with the amplifier 435 of the CW-protected channel 43 to receive therefrom the validation signal *S*, and with the tunable filtering means 431 of the CW-protected channel 43 to control their operation on the basis of the CW/ICW instantaneous frequency f received from the instantaneous frequency measurement unit 432. In particular, the processing unit 44 is configured to operate the tunable filtering means 431 of the CW-protected channel 43 so that said tunable filtering means 431 filter out CW/ICW signal(s) from the combined RF signal C. In detail, the processing unit 44 is configured to control operation of the tunable filtering means 431 of the CW-protected channel 43 so that said tunable filtering means 431 filter out, from the frequency spectrum of the combined RF signal C, a frequency band comprising said CW/ICW instantaneous frequency f. Preferably, the processing unit 44 is configured to select and operate the selectively-switchable notch filter 431a which is configured to filter out the frequency band comprising the CW/ICW instantaneous frequency f.

Preferably, the instantaneous frequency measurement unit 432 is an interferometer.

Conveniently, in a first alternative embodiment, the instantaneous frequency measurement unit 432 is not comprised by the CW-protected channel 43, but it is comprised, in general, by the WO receiver 4, is coupled with the CW-protected channel 43 to receive therefrom the RF signal provided as output by the tunable filtering means 431 of said CW-protected channel 43, is operable to determine an instantaneous frequency f of a CW/ICW signal present in the RF signal received from said tunable filtering means 431, and is coupled with the processing unit 44 to provide the latter with the determined CW/ICW instantaneous frequency f.

Again conveniently, in a second alternative embodiment, the CW-protected channel 43 comprises a control unit (not shown in figure 5) coupled with the instantaneous frequency measurement unit 432 (which can be comprised by the CW-protected channel 43 or, in general, by the WO receiver 4) to receive therefrom the CW/ICW instantaneous frequency f, and with the tunable filtering means 431 to control their operation on the basis of the CW/ICW instantaneous frequency f received from the instantaneous frequency measurement unit 432.

Moreover, again with reference to figure 4, each goniometric channel 41 further comprises:
- a respective offset unit 413 which is coupled with the respective square-law detector 412 to receive therefrom the first video signal and with the processing unit 44 to receive therefrom a CW/ICW offset video signal *O*, and which is operable to compensate the received first video signal on the basis of the received CW/ICW offset video signal *O* so as to remove CW/ICW video signal contribution from the received first video signal; and
- a respective amplifier 414 coupled with the respective offset unit 413 to receive therefrom the compensated first video signal, and operable to amplify the compensated first video signal received from the respective offset unit 413 so as to obtain a third video signal Y which is provided to the processing unit 44.

Preferably, the offset unit 413 of each goniometric channel 41 is operable to subtract the received CW/ICW offset video signal *O* from the received first video signal.

Again preferably, the amplifier 414 of each goniometric channel 41 is a logarithmic amplifier operable to apply the amplification function shown in figure 6 to the compensated first video signal received from the respective offset unit 413.

Furthermore, the processing unit 44 is configured to:
- estimate a CW/ICW power level on the basis of the validation signal *S* received from the CW-protected channel 43, in particular from the amplifier 435 of the CW-protected channel 43, and of the third video signals Y received from all the goniometric channels 41, in particular from the amplifiers 414 of the goniometric channels 41;
- generate, on the basis of the estimated CW/ICW power level, the CW/ICW offset video signal *O* to be fed back to each goniometric channel 41 for first video signal compensation; and
- detect a pulsed signal on the basis of the received third video signals *Y*.

In particular, during normal operation of the WO receiver 4 and in absence of any CW/ICW,
- the tunable filtering means 431 of the CW-protected channel 43 are not activated and the instantaneous frequency measurement unit 432 receives therefrom the combined RF signal C; and
- the processing unit 44 does not estimate the CW/ICW power level, does not provide the CW/ICW offset video signal *O* to the offset units 413 of the goniometric channels 41 thereby receiving from the goniometric channels 41 third video signals Y which are simply the first video signals amplified by the amplifiers 414, and detects pulsed signals on the basis of said amplified first video signals.

When one or more of the directional antennas 5 begin(s) to be illuminated by a CW/ICW signal, the instantaneous frequency measurement unit 432 estimates the instantaneous frequency f of said CW/ICW signal and provides it to the processing unit 44 which, thence, correspondingly operates the tunable filtering means 431. After activation and tuning of the tunable filtering means 431, the processing unit 44:
- estimates the CW/ICW power level on the basis of the validation signal *S* received from the CW-protected channel 43 and of the third video signals *Y* received from the goniometric channels 41;
- generates, on the basis of the estimated CW/ICW power level, the CW/ICW offset video signal *O*; and
- feeds back said CW/ICW offset video signal *O* to each goniometric channel 41 for first video signal compensation.

Conveniently, the CW/ICW offset video signal *O* is an analog video signal having a constant amplitude related to the estimated CW/ICW power level.

Preferably, the processing unit 44 generates the CW/ICW offset signal *O* by applying to the estimated CW/ICW power level an attenuation function which is the inverse of the amplification function applied by the amplifiers 414 of the goniometric channels 41. In this way, since the CW/ICW offset video signal *O* is injected into the goniometric channels 41 before the amplifiers 414, CW video level cancellation is performed with the appropriate value. In fact, a bad estimation of the actual CW power level could generate negative values to be injected into the amplifiers 414 of the goniometric channels 41.

Conveniently, the processing unit 44:
- comprises analog-to-digital conversion means (not shown in figures 4 and 5) operable to convert the analog validation signal *S* received from the CW-protected channel 43 into a corresponding digital validation signal *S* and the analog third video signals *Y* received from all the goniometric channels 41 into corresponding digital third video signals *Y*;
- is configured to estimate the CW/ICW power level on the basis of the digital validation signal *S* and of the digital third video signals *Y*;
- is configured to generate, on the basis of the estimated CW/ICW power level, a digital CW/ICW offset video signal *O*;
- comprises digital-to-analog conversion means (not shown in figures 4 and 5) operable to convert the digital CW/ICW offset video signal *O* into a corresponding analog CW/ICW offset video signal *O*;
- is configured to apply to the analog CW/ICW offset video signal *O* an attenuation function which is the inverse of the amplification function applied by the amplifiers 414 of the goniometric channels 41; and
- is configured to detect a pulsed signal on the basis of the digital third video signals *Y*.

In particular, for a considered time instant, if the processing unit 44 does not detect any pulsed signal on the basis of a digital validation signal S sample corresponding to said considered time instant, it estimates the CW/ICW power level on the basis of samples corresponding to said considered time instant of the digital third video signals Y, while, if the processing unit 44 detects a pulsed signal on the basis of the digital validation signal *S* sample corresponding to said considered time instant, it does not use the values corresponding to said considered time instant of the digital third video signals *Y* for CW/ICW power level estimation. In other words, the processing unit 44 uses digital validation signal *S* samples to decide whether the corresponding samples of the digital third video signals *Y* are valid or not for CW/ICW power level estimation.

Therefore, the CW-protected channel 43 supports a correct estimation of the video CW power level also in presence of pulsed signals. In fact, in presence of a CW/ICW, the video CW power level is not present in the CW-protected channel 43, since the tunable filtering means 431 have been tuned and activated so as to eliminate it. Thence, the CW-protected channel 43 "sees" only the pulsed signals. In this way, by comparing sample by sample the digital validation signal *S* with the digital third video signals Y, the processing unit 44 is able to distinguish which sample is relevant to the CW signal, and which is relevant to the pulsed signals.

In order to cancel CW video level in the goniometric channels 41, the WO receiver 4 exploits a step-by-step approach so as to minimize residual video signal at the output of the amplifiers 414. Typically, after few steps, the process converges.

Finally, figure 7 shows video signals outputted by each of the goniometric channels 41, in figure 7 denoted as Direction Finding (DF) Channels 0, 1, 2 and 3, and by the CW-protected channel, in figure 7 denoted as Omni Channel (since it receives as input RF signals received from all directions), when in the electromagnetic environment surrounding the antennas 5 is present a CW threat.

As shown in figure 7, initially (i.e., as shown in the left hand side of the time graphs) on each channel, i.e., on DF Channels and Omni Channel, a continuous signal level is present. After the tuning and the activation of the tunable filtering means 431, only pulses are detected on the Omni Channel since the CW is cancelled by the tunable filtering means 431. The detection that will be performed by the processing unit 44 on this signal will represent the invalidity of the relevant samples collected from the DF channels as far as concerns average estimation of CW video level. The accuracy of CW video level estimation performed using this architecture allows the system to maintain its pulse visibility in very dense electromagnetic scenario when several CW threats are present.

The Applicant has deeply tested and evaluated the WO receiver according to the present invention in different operative scenarios brightly overcoming each maturity gate.

In particular, the CW-protected channel guarantees 100% of probability to correctly estimate the CW level in few microseconds. Therefore, by using the CW-protected channel approach, the WO receiver dynamically manages CW and ICW emitters and maintains full capability on detection and tracking of the other emitters.

The advantages of the present invention are clear from the foregoing. In particular, it is worth highlighting the fact that the WO receiver according to the present invention allows ESM systems and radar warning systems to increase their CW protection capability. In fact, the WO receiver with the CW-protected channel is able to detect more than one CW in whole dynamic range and to keep the performance of sensitivity under the CW power level.

Finally, it is clear that numerous modifications and variants can be made to the present invention, all falling within the scope of the invention, as defined in the appended claims.

## Claims

1. A wide-open receiver (4) comprising:
a plurality of goniometric channels (41) each intended to be coupled with a respective antenna (5) to receive a respective incoming radiofrequency signal, and operable to obtain, on the basis of the respective incoming radiofrequency signal, a respective first video signal indicative of a power of said respective incoming radiofrequency signal, and a respective second video signal (*Y*) based on said respective first video signal; and
processing means (44) operable to detect, on the basis of the second video signals (*Y*), one or more pulsed signals present in one or more of the incoming radiofrequency signals;
the wide-open receiver (4) being **characterized:**
**by** further comprising a continuous-wave-protected channel (43), which
- is operable to receive a combined radiofrequency signal (*C*) based on the incoming radiofrequency signals received by all the goniometric channels (41),
- comprises filtering means (431) operable to filter out, from the combined radiofrequency signal (*C*), a continuous wave signal present in one or more of the incoming radiofrequency signals thereby obtaining a continuous-wave-free radiofrequency signal which is free of said continuous wave signal, and
- is operable to obtain a validation video signal (*S*) on the basis of said continuous-wave-free radiofrequency signal;
in that the processing means (44) are operable to estimate a continuous wave power on the basis of the second video signals (*Y*) and of the validation video signal (*S*); and
in that each goniometric channel (41) is operable to remove, on the basis of the estimated continuous wave power, a continuous wave video signal contribution from the respective first video signal thereby obtaining a respective intermediate video signal, and to obtain the respective second video signal (*Y*) based on said respective intermediate video signal.

2. The wide-open receiver of claim 1, wherein the processing means (44) are operable to identify, on the basis of the validation video signal (*S*), values of the second video signals (Y) valid for continuous wave power estimation, and to estimate the continuous wave power only on the basis of the values of the second video signals (Y) identified as valid.

3. The wide-open receiver of claim 2, wherein, for each time instant, the corresponding values of the second video signals (*Y*) are identified by the processing means (44) as valid for continuous wave power estimation if no pulsed signal is detected by the processing means (44) on the basis of a corresponding value of the validation video signal (*S*) .

4. The wide-open receiver according to any preceding claim, wherein the filtering means (431) are tunable so as to filter out the continuous wave signal from the combined radiofrequency signal (C) thereby obtaining the continuous-wave-free radiofrequency signal.

5. The wide-open receiver of claim 4, wherein the filtering means (431) comprise a plurality of selectively-switchable notch filters (431a) each configured to filter out a respective radiofrequency band.

6. The wide-open receiver according to any preceding claim, further comprising an instantaneous frequency measurement unit (432) operable to determine a frequency (*f*) of the continuous wave signal, and wherein the filtering means (431) are operable to filter out, from the combined radiofrequency signal (*C*), a radiofrequency band including the frequency (*f*) determined by the instantaneous frequency measurement unit (432).

7. The wide-open receiver of claim 6, wherein the instantaneous frequency measurement unit (432) is an interferometer.

8. The wide-open receiver according to any preceding claim, further comprising a combining unit (42) coupled with the goniometric channels (41) and with the continuous-wave-protected channel (43), and operable to obtain the combined radiofrequency signal (*C*) based on the incoming radiofrequency signals received by all the goniometric channels (41) and to provide the continuous-wave-protected channel with said combined radiofrequency signal (*C*).

9. The wide-open receiver according to any preceding claim, wherein each goniometric channel (41) comprises a respective offset unit (413) operable to compensate the respective first video signal on the basis of the estimated continuous wave power thereby obtaining the respective intermediate video signal.

10. The wide-open receiver of claim 9, wherein the processing means (44) are operable to generate an offset video signal (*O*) based on the estimated continuous wave power; and wherein each offset unit (413) is coupled with the processing means (44) to receive the offset video signal (*O*), and is operable to compensate the respective first video signal on the basis of the offset video signal (*O*).

11. The wide-open receiver of claim 10, wherein each offset unit (413) is operable to subtract the offset video signal (*O*) from the respective first video signal thereby obtaining the respective intermediate video signal.

12. The wide-open receiver according to claim 10 or 11, wherein each goniometric channel (41) further comprises:
a respective first square-law detector (412) operable to obtain the respective first video signal based on the respective incoming radiofrequency signal, and coupled with the respective offset unit (413) to provide it with the respective first video signal; and
a respective first amplifier (414) coupled with the respective offset unit (413) to receive the respective intermediate video signal, and operable to amplify said respective intermediate video signal according to a given amplification function thereby obtaining the respective second video signal (*Y*);
wherein the continuous-wave-protected channel (43) comprises:
a second square-law detector (434) operable to obtain a third video signal based on the continuous-wave-free radiofrequency signal, which third video signal is indicative of a power of the continuous-wave-free radiofrequency signal; and
a second amplifier (435) coupled with the second square-law detector (434) to receive the third video signal, and operable to amplify said third video signal according to said given amplification function thereby obtaining the validation video signal (*S*);
and wherein the processing means (44) are operable to generate the offset video signal (*O*) by applying to the estimated continuous wave power an attenuation function inverse of the given amplification function.

13. The wide-open receiver of claim 12, wherein the first amplifiers (414) and the second amplifier (435) are logarithmic amplifiers.

14. An electronic Support Measure (ESM) system comprising the wide-open receiver (4) claimed in any preceding claim.

15. A radar warning system comprising the wide-open receiver (4) claimed in any claim 1-13.

## Patentansprüche

1. Weit geöffneter Empfänger (4), Folgendes aufweisend:
mehrere goniometrische Kanäle (41), wovon jeder dazu bestimmt ist, mit einer jeweiligen Antenne (5) gekoppelt zu sein, um ein jeweiliges ankommendes Funkfrequenzsignal zu empfangen, und funktionsfähig ist, um auf der Grundlage des jeweiligen ankommenden Funkfrequenzsignals ein jeweiliges erstes Videosignal, das eine Stärke des jeweiligen ankommenden Funkfrequenzsignals anzeigt, und ein jeweiliges zweites Videosignal (Y) zu erhalten, das auf dem jeweiligen ersten Videosignal basiert; und
Verarbeitungseinrichtungen (44), die funktionsfähig sind, um auf der Grundlage des zweiten Videosignals (Y) ein oder mehrere gepulste Signal/e zu erfassen,
das/die in einem oder mehreren der ankommenden Funkfrequenzsignal/e vorhanden ist/sind;
wobei der weit geöffnete Empfänger (44) **dadurch gekennzeichnet ist:**
**dass** er darüber hinaus einen dauerstrichgeschützten Kanal (43) umfasst, der
- funktionsfähig ist, um ein kombiniertes Funkfrequenzsignal (C) auf Grundlage der ankommenden Funkfrequenzsignale zu empfangen, die durch sämtliche goniometrischen Kanäle (41) empfangen werden,
- Filtereinrichtungen (431) umfasst, die funktionsfähig sind, um aus dem kombinierten Funkfrequenzsignal (C) ein Dauerstrichsignal herauszufiltern, das in einem oder mehreren der ankommenden Funkfrequenzsignal/e vorhanden ist, wodurch ein dauerstrichfreies Funkfrequenzsignal erhalten wird, das frei von dem Dauerstrichsignal ist; und
- funktionsfähig ist, um ein Validierungsvideosignal (S) auf Grundlage
des dauerstrichfreien Funkfrequenzsignals zu erhalten;
**dass** die Verarbeitungseinrichtungen (44) funktionsfähig sind, um eine Dauerstrichleistung auf Grundlage der zweiten Videosignale (Y) und des Validierungsvideosignals (S) zu schätzen; und
**dass** jeder goniometrische Kanal (41) funktionsfähig ist, um auf Grundlage der geschätzten Dauerstrichleistung einen Dauerstrichvideosignalbeitrag aus dem jeweiligen ersten Videosignal zu entfernen, wodurch ein jeweiliges Zwischenvideosignal erhalten wird, und das jeweilige zweite Videosignal (Y) zu erhalten,
das auf dem jeweiligen Zwischenvideosignal basiert.

2. Weit geöffneter Empfänger nach Anspruch 1, wobei die Verarbeitungseinrichtungen (44) funktionsfähig sind, um auf Grundlage des Validierungsvideosignals (S) Werte des zweite Videosignals (Y) zu erkennen, die für eine Dauerstrichleistungsschätzung gültig sind, und die Dauerstrichleistung nur auf Grundlage der als gültig erkannten Werte des zweiten Videosignals (Y) zu schätzen.

3. Weit geöffneter Empfänger nach Anspruch 2, wobei für jeden Zeitmoment die entsprechenden Werte der zweiten Videosignale (Y) durch die Verarbeitungseinrichtungen (44) als gültig für eine Dauerstrichleistungsschätzung erkannt werden, wenn kein gepulstes Signal durch die Verarbeitungseinrichtungen (44) auf Grundlage eines entsprechenden Werts des Validierungsvideosignals (S) erfasst wird.

4. Weit geöffneter Empfänger nach einem der vorhergehenden Ansprüche, wobei die Filtereinrichtungen (431) abstimmbar sind, um das Dauerstrichsignal aus dem kombinierten Funkfrequenzsignal (C) herauszufiltern, wodurch das dauerstrichfreie Funkfrequenzsignal erhalten wird.

5. Weit geöffneter Empfänger nach Anspruch 4, wobei die Filtereinrichtungen (431) mehrere selektiv schaltbare Kerbfilter (431a) umfassen, wovon jedes dazu ausgelegt ist, ein jeweiliges Funkfrequenzband herauszufiltern.

6. Weit geöffneter Empfänger nach einem der vorhergehenden Ansprüche, darüber hinaus eine Momentanfrequenzmesseinheit (432) umfassend, die funktionsfähig ist, um eine Frequenz (f) des Dauerstrichsignals zu bestimmen, und wobei die Filtereinrichtungen (431) funktionsfähig sind, um aus dem kombinierten Funkfrequenzsignal (C) ein Funkfrequenzband herauszufiltern, das die durch die Momentanfrequenzmesseinheit (432) bestimmte Frequenz (f) enthält.

7. Weit geöffneter Empfänger nach Anspruch 6, wobei es sich bei der Momentanfrequenzmesseinheit (432) um ein Interferometer handelt.

8. Weit geöffneter Empfänger nach einem der vorhergehenden Ansprüche, darüber hinaus eine Kombiniereinheit (42) umfassend, die mit den goniometrischen Kanälen (41) und mit dem dauerstrichgeschützten Kanal (43) gekoppelt und funktionsfähig ist, um das kombinierte Funkfrequenzsignal (C) auf Grundlage der ankommenden Funkfrequenzsignale zu erhalten, die durch sämtliche goniometrischen Kanäle (41) empfangen werden, und dem dauerstrichgeschützten Kanal das kombinierte Funkfrequenzsignal (C) bereitzustellen.

9. Weit geöffneter Empfänger nach einem der vorhergehenden Ansprüche, wobei jeder goniometrische Kanal (41) eine jeweilige Versatzeinheit (413) umfasst, die funktionsfähig ist, um das jeweilige erste Videosignal auf Grundlage der geschätzten Dauerstrichleistung auszugleichen, wodurch das jeweilige Zwischenvideosignal erhalten wird.

10. Weit geöffneter Empfänger nach Anspruch 9, wobei die Verarbeitungseinrichtungen (44) funktionsfähig sind, um ein Versatzvideosignal (O) auf Grundlage der geschätzten Dauerstrichleistung zu generieren; und wobei jede Versatzeinheit (413) mit den Verarbeitungseinrichtungen (44) gekoppelt ist, um das Versatzvideosignal (O) zu empfangen, und funktionsfähig ist, um das jeweilige erste Videosignal auf Grundlage des Versatzvideosignals (O) auszugleichen.

11. Weit geöffneter Empfänger nach Anspruch 10, wobei jede Versatzeinheit (413) funktionsfähig ist, um das Versatzvideosignal (O) vom jeweiligen ersten Videosignal zu subtrahieren, wodurch das jeweilige Zwischenvideosignal erhalten wird.

12. Weit geöffneter Empfänger nach Anspruch 10 oder 11, wobei jeder goniometrische Kanal (41) darüber hinaus umfasst:
einen jeweiligen ersten quadratisch wirkenden Detektor (412), der funktionsfähig ist, um das jeweilige erste Videosignal auf Grundlage des jeweiligen ankommenden Funkfrequenzsignals zu erhalten, und der mit der jeweiligen Versatzeinheit (413) gekoppelt ist, um dieser das jeweilige erste Videosignal bereitzustellen; und
einen jeweiligen ersten Verstärker (414), der mit der jeweiligen Versatzeinheit (413) gekoppelt ist, um das jeweilige Zwischenvideosignal zu empfangen, und der funktionsfähig ist, um das jeweilige Zwischenvideosignal entsprechend einer vorgegebenen Verstärkungsfunktion zu verstärken, wodurch das jeweilige zweite Videosignal (Y) erhalten wird;
wobei der dauerstrichgeschützte Kanal (43) umfasst:
einen zweiten quadratisch wirkenden Detektor (434), der funktionsfähig ist, um ein drittes Videosignal auf Grundlage des dauerstrichfreien Funkfrequenzsignals zu erhalten, welches dritte Videosignal eine Stärke des dauerstrichfreien Funkfrequenzsignals anzeigt; und
einen zweiten Verstärker (435), der mit dem zweiten quadratisch wirkenden Detektor (434) gekoppelt ist, um das dritte Videosignal zu empfangen, und der funktionsfähig ist, um das dritte Videosignal entsprechend der vorgegebenen Verstärkungsfunktion zu verstärken, wodurch das Validierungsvideosignal (S) erhalten wird;
und wobei die Verarbeitungseinrichtungen (44) funktionsfähig sind, um das Versatzvideosignal (O) durch Anlegen einer zur vorgegebenen Verstärkungsfunktion umgekehrten Dämpfungsfunktion an die geschätzte Dauerstrichleistung zu generieren.

13. Weit geöffneter Empfänger nach Anspruch 12, wobei es sich bei dem ersten Verstärker (414) und dem zweiten Verstärker (435) um logarithmische Verstärker handelt.

14. Elektronisches Unterstützungsmaßnahmensystem, ESM-System, das den in einem der vorhergehenden Ansprüche beanspruchten, weit geöffneten Empfänger (4) umfasst.

15. Radarwarnsystem, das den in einem der vorhergehenden Ansprüche 1 - 13 beanspruchten, weit geöffneten Empfänger (4) umfasst.

## Revendications

1. Récepteur à grande ouverture (4) comprenant :
une pluralité de canaux goniométriques (41) destinés chacun à être couplés avec une antenne respective (5) pour recevoir un signal radiofréquence entrant respectif, et
capables d'obtenir sur la base du signal radiofréquence entrant respectif, un premier signal vidéo respectif indiquant une puissance dudit signal radiofréquence entrant respectif, et un second signal vidéo respectif (Y) basé sur ledit premier signal vidéo respectif ; et
des moyens de traitement (44) capables de détecter sur la base des seconds signaux vidéo (Y), un ou plusieurs signaux pulsés présents dans un ou plusieurs des signaux radiofréquence entrants ;
le récepteur à grande ouverture (4) étant **caractérisé**
**en ce qu'**il comprend en outre un canal protégé contre les ondes continues (43) qui
- est capable de recevoir un signal radiofréquence combiné (C) basé sur les signaux radiofréquence entrants reçus par tous les canaux goniométriques (41),
- comprend des moyens de filtrage (431) capables de filtrer du signal radiofréquence combiné (C) un signal d'ondes continues présent dans un ou plusieurs des signaux radiofréquence entrants, obtenant par là même un signal radiofréquence sans onde continue qui est exempt dudit signal d'ondes continues, et
- est capable d'obtenir un signal vidéo de validation (S) sur la base dudit signal radiofréquence exempt d'onde continue ;
**en ce que** les moyens de traitement (44) sont capables d'estimer une puissance d'ondes continues sur la base des seconds signaux vidéo (Y) et du signal vidéo de validation (S) ; et
**en ce que** chaque canal goniométrique (41) est capable de retirer sur la base de la puissance d'ondes continues estimée, une contribution de signal vidéo d'ondes continues du premier signal vidéo respectif, obtenant par là même un signal vidéo intermédiaire respectif, et d'obtenir le second signal vidéo respectif (Y) basé sur ledit signal vidéo intermédiaire respectif.

2. Récepteur à grande ouverture selon la revendication 1, dans lequel les moyens de traitement (44) sont capables d'identifier, sur la base du signal vidéo de validation (S), des valeurs des seconds signaux vidéos (Y) valides pour l'estimation de puissance d'ondes continues, et d'estimer la puissance d'ondes continues seulement sur la base des valeurs des seconds signaux vidéo (Y) identifiés comme étant valides.

3. Récepteur à grande ouverture selon la revendication 2, dans lequel pour chaque instant temporel, les valeurs correspondantes des seconds signaux vidéo (Y) sont identifiées par les moyens de traitement (44) comme étant valides pour l'estimation de puissance d'ondes continues si aucun signal pulsé n'est détecté par les moyens de traitement (44) sur la base d'une valeur correspondante du signal vidéo de validation (S).

4. Récepteur à grande ouverture selon l'une quelconque des revendications précédentes, dans lequel les moyens de filtrage (431) peuvent être accordés de sorte à filtrer le signal d'ondes continues du signal radiofréquence combiné (C), obtenant par là même le signal radiofréquence exempt d'onde continue.

5. Récepteur à grande ouverture selon la revendication 4, dans lequel les moyens de filtrage (431) comprennent une pluralité de filtres coupe-bande sélectionnables par commutation (431a), chacun étant configuré pour rejeter une bande de radiofréquence respective.

6. Récepteur à grande ouverture selon l'une quelconque des revendications précédentes, comprenant en outre une unité de mesure de fréquence instantanée (432) capable de déterminer une fréquence (f) du signal d'ondes continues, et dans lequel les moyens de filtrage (431) sont capables de rejeter, depuis le signal radiofréquence combiné (C), une bande de radiofréquence contenant la fréquence (f) déterminée par l'unité de mesure de fréquence instantanée (432).

7. Récepteur à grande ouverture selon la revendication 6, dans lequel l'unité de mesure de fréquence instantanée (432) est un interféromètre.

8. Récepteur à grande ouverture selon l'une quelconque des revendications précédentes, comprenant en outre une unité de combinaison (42) couplée aux canaux goniométriques (41) et au canal protégé contre les ondes continues (43), et capable d'obtenir le signal radiofréquence combiné (C) sur la base des signaux radiofréquence entrants reçus par tous les canaux goniométriques (41), et de doter le canal protégé contre les ondes continues dudit signal radiofréquence combiné (C).

9. Récepteur à grande ouverture selon l'une quelconque des revendications précédentes, dans lequel chaque canal goniométrique (41) comprend une unité de décalage respective (413) capable de compenser le premier signal vidéo respectif sur la base de la puissance d'ondes continues estimée, obtenant par là même le signal vidéo intermédiaire respectif.

10. Récepteur à grande ouverture selon la revendication 9, dans lequel les moyens de traitement (44) sont capables de générer un signal vidéo à décalage (O) basé sur la puissance d'ondes continues estimée ; et dans lequel chaque unité de décalage (413) est couplée avec les moyens de traitement (44) pour recevoir le signal vidéo à décalage (O), et est capable de compenser le premier signal vidéo respectif sur la base du signal vidéo à décalage (O).

11. Récepteur à grande ouverture selon la revendication 10, dans lequel chaque unité de décalage (413) est capable de soustraire le signal vidéo à décalage (O) du premier signal vidéo respectif, obtenant par là même le signal vidéo intermédiaire respectif.

12. Récepteur à grande ouverture selon la revendication 10 ou 11, dans lequel chaque canal goniométrique (41) comprend en outre :
un premier détecteur quadratique respectif (412) capable d'obtenir le premier signal vidéo respectif sur la base du signal radiofréquence entrant respectif, et couplé avec l'unité de décalage respective (413) pour la doter du premier signal vidéo respectif ;
et
un premier amplificateur respectif (414) couplé avec l'unité de décalage respective (413) pour recevoir le signal vidéo intermédiaire respectif, et capable d'amplifier ledit signal vidéo intermédiaire respectif selon une fonction d'amplification donnée,
obtenant par là même le second signal vidéo respectif (Y) ;
dans lequel le canal protégé contre les ondes continues (43) comprend :
un second détecteur quadratique (434) capable d'obtenir un troisième signal vidéo basé sur le signal radiofréquence exempt d'onde continue, lequel troisième signal vidéo indique une puissance du signal radiofréquence exempt d'onde continue ; et
un second amplificateur (435) couplé avec le second détecteur quadratique (434) pour recevoir le troisième signal vidéo, et capable d'amplifier ledit troisième signal vidéo selon ladite fonction d'amplification donnée, obtenant par là même le signal vidéo de validation (S) ;
et dans lequel les moyens de traitement (44) sont capables de générer le signal vidéo à décalage (O) en appliquant à la puissance d'ondes continues estimée une fonction d'atténuation inverse de la fonction d'amplification donnée.

13. Récepteur à grande ouverture selon la revendication 12, dans lequel les premiers amplificateurs (414) et le second amplificateur (435) sont des amplificateurs logarithmiques.

14. Système de mesure de soutien électronique (ESM) comprenant le récepteur à grande ouverture (4) selon l'une quelconque des revendications précédentes.

15. Système d'avertissement radar comprenant le récepteur à grande ouverture (4) selon l'une quelconque des revendications 1 à 13.
